# EUROPEAN PATENT APPLICATION

(11) **EP 4 664 898 A1**
(43) Date of publication of application: **17.12.2025**
(21) Application number: 24752895.3
(22) Date of filing: 07.02.2024
(51) Int. Cl.: H04N 21/431

(54) **INFORMATION DISPLAY METHOD AND APPARATUS, DEVICE AND STORAGE MEDIUM**

(30) Priority: 10.02.2023 CN 202310135243
(71) Applicant: Beijing Zitiao Network Technology Co., Ltd., Beijing 100190 (CN)
(72) Inventor: YANG, Jiahui, Beijing 100028 (CN); LI, Yaping, Beijing 100028 (CN)
(74) Representative: Isarpatent
(86) International application number: PCT/CN2024/076607
(87) International publication number: WO 2024/165040

(57) **Abstract**

The present disclosure relates to the technical field of computers and provides an information display method and apparatus, a device and a storage medium. The method comprises: during the process of playing first media content on a media content stream playback interface, displaying a preset character control in a playback picture of the first media content (101); and, in response to a triggering operation in respect of the preset character control, displaying in a preset area on the media content stream playback interface subtitle information associated with the first media content, the subtitle information associated with the first media content being determined on the basis of voice information in the first media content (102).

## Description

### CROSS-REFERENCE TO RELATED APPLICATIONS

The present application is based on and claims priority to Chinese Application No. 202310135243.5 filed on Feb. 10, 2023, the disclosure of which is incorporated by reference herein in its entirety.

### TECHNICAL FIELD

Embodiments of the present disclosure relate to the technical field of computers, and in particular an information display method and apparatus, a device, and a storage medium.

### BACKGROUND

With the continuous development of Internet technologies, Applications (APPs) can present a variety of multimedia contents to users, and different users can share their own works with each other by posting multimedia contents such as videos.

### SUMMARY

Embodiments of the present disclosure provide an information display method and apparatus, a storage medium, and a device, which can optimize the existing information display solutions.

According to a first aspect, an embodiment of the present disclosure provides an information display method, comprising:
during playing a first media content in a media content stream playing interface, displaying a preset character control in a playing image of the first media content;
displaying subtitle information associated with the first media content in a preset area in the media content stream playing interface in response to a trigger operation for the preset character control, wherein the subtitle information associated with the first media content is determined based on speech information in the first media content.

According to a second aspect, an embodiment of the present disclosure further provides an information display apparatus, comprising:
a first control display module for displaying, during playing a first media content in a media content stream playing interface, a preset character control in a playing image of the first media content;
a subtitle display module for displaying subtitle information associated with the first media content in a preset area in the media content stream playing interface in response to a trigger operation for the preset character control, wherein the subtitle information associated with the first media content is determined based on speech information in the first media content.

According to a third aspect, an embodiment of the present disclosure further provides an electronic device, which comprises:
one or more processors;
a storage means for storing one or more programs,
wherein the one or more programs, when executed by the one or more processors, cause the one or more processors to implement the information display method provided by the embodiment of the present disclosure.

According to a fourth aspect, an embodiment of the present disclosure further provides a storage medium containing computer-executable instructions, wherein the computer-executable instructions, when executed by a computer processor, are configured to perform the information display method provided by the embodiment of the present disclosure.

The information display solution provided by the embodiment of the present disclosure comprises: during playing a first media content in a media content stream playing interface, displaying a preset character control in a playing image of the first media content; displaying subtitle information associated with the first media content in a preset area in the media content stream playing interface in response to a trigger operation for the preset character control, wherein the subtitle information associated with the first media content is determined based on speech information in the first media content.

### BRIEF DESCRIPTION OF THE DRAWINGS

The above and other features, advantages and aspects of various embodiments of the present disclosure will become more apparent by referring to the following specific implementations when taken in conjunction with the accompanying drawings. Throughout the drawings, the same or similar reference numerals indicate the same or similar elements. It should be understood that the drawings are schematic, and the original and elements are not necessarily drawn to scale.
Fig. 1 is a schematic flow diagram of an information display method provided by an embodiment of the present disclosure;
Fig. 2 is a schematic diagram of an interface interaction provided by an embodiment of the present disclosure;
Fig. 3 is a schematic diagram of another interface interaction provided by an embodiment of the present disclosure;
Fig. 4 is a schematic diagram of yet another interface interaction provided by an embodiment of the present disclosure;
Fig. 5 is a schematic flow diagram of another information display method provided by an embodiment of the present disclosure;
Fig. 6 is a schematic diagram of yet another interface interaction provided by an embodiment of the present disclosure;
Fig. 7 is a schematic structural diagram of an information display apparatus provided by an embodiment of the present disclosure;
Fig. 8 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be implemented in various forms and should not be construed as limited to the embodiments set forth here, but rather, these embodiments are provided for a more thorough and complete understanding of the present disclosure. It should be understood that the drawings and embodiments of the present disclosure are only used for exemplary functions, and are not used to limit the protection scope of the present disclosure.

It should be understood that the steps described in the method embodiment of the present disclosure can be performed in a different order and/or in parallel. In addition, the method embodiment can include additional steps and/or omit performing the shown steps. The scope of the present disclosure is not limited in this respect.

As used herein, the term "including" and its variants are open-ended including, that is, "including but not limited to". The term "based on" is "at least partially based on". The term "one embodiment" means "at least one embodiment"; the term "another embodiment" means "at least one other embodiment"; the term "some embodiments" means "at least some embodiments". Related definitions of other terms will be given in the following description.

It should be noted that "first", "second", and other concepts mentioned in the present disclosure are only used to distinguish different means, modules or units, and are not used to limit the order or interdependence of the functions performed by these means, modules or units.

It should be noted that the modifications of "a" and "a plurality of" mentioned in the present disclosure are schematic rather than limiting, and those skilled in the art should understand that unless the context clearly indicates otherwise, they should be understood as "one or a plurality of".

Names of messages or information exchanged among a plurality of means in the embodiments of the present disclosure are only used for illustrative purposes, and are not used to limit the scope of these messages or information.

It can be understood that, before using the technical solutions disclosed in various embodiments of the present disclosure, users should be informed of the types, scope of use, use scenarios, etc. of personal information involved in the present disclosure in an appropriate way according to relevant laws and regulations, and user authorization is obtained.

For example, in response to receiving the user's active request, prompt information is sent to the user to clearly remind the user that the operation requested by the user will require acquiring and using the user's personal information. Therefore, the user can independently choose whether to provide personal information to software or hardware such as electronic devices, applications, servers or storage media that perform the operations of the technical solutions of the present disclosure according to the prompt information.

As an optional but non-limiting implementation, in response to receiving the user's active request, the way to send the prompt information to the user can be, for example, a pop-up window, in which the prompt information can be presented in text. In addition, the pop-up window can also carry a selection control for the user to choose "agree" or "disagree" to provide personal information to the electronic device.

It can be understood that the above process of notifying and acquiring user authorization is only schematic, and does not limit the implementations of the present disclosure. Other ways to meet relevant laws and regulations can also be applied to the implementations of the present disclosure.

It can be understood that the data involved in the technical solution (including but not limited to the data itself, data acquisition or use) shall comply with the requirements of corresponding laws, regulations and relevant regulations.

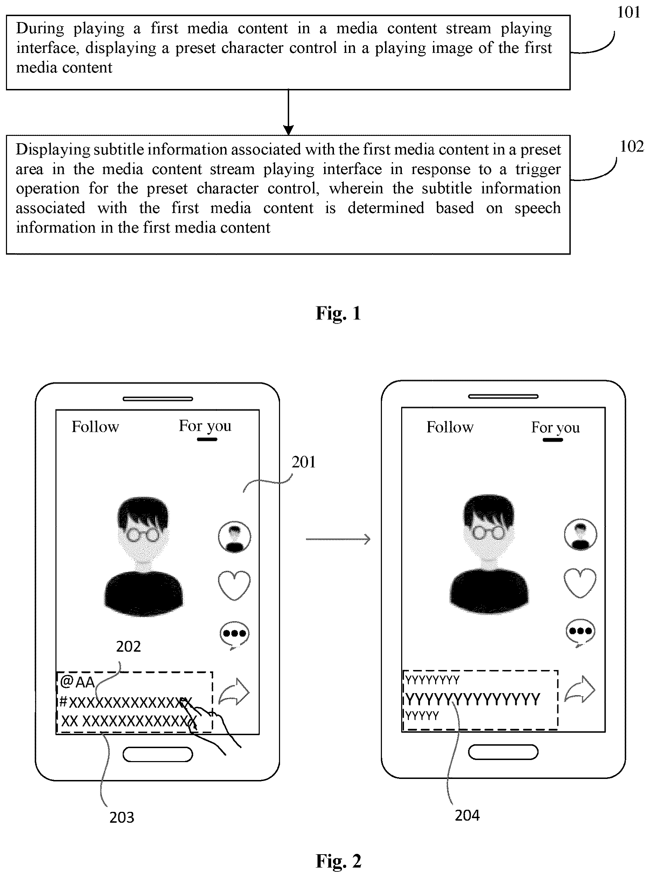

Fig. 1 is a schematic flow diagram of an information display method provided by an embodiment of the present disclosure. The embodiment of the present disclosure is suitable for circumstances where subtitle information is displayed. The method can be performed by an information display apparatus, which can be implemented in the form of software and/or hardware, or alternatively, by an electronic device. The electronic device can be a mobile terminal such as a mobile phone, a smart watch, a tablet computer or a personal digital assistant, or can be a device such as a Personal Computer (PC) terminal or a server.

As shown in Fig. 1, the method comprises:
Step 101: during playing a first media content in a media content stream playing interface, displaying a preset character control in a playing image of the first media content.

In the embodiment of the present disclosure, the media content stream playing interface can be an interface in a preset application. The preset application can provide the media content stream playing function, of which the specific type is not limited, and can be installed in an electronic device. The media content stream playing interface is used for playing the media content in the media content stream, and the media content can be a media content work posted by a user through the preset application. The media content contains speech information, which can be specifically a video or an image-text collection configured with speech information. The image-text collection can contain one or more images, that is, the media content work can include a video work, an image-text work, or the like.

Subtitles can help media content viewers better understand the media content. In the related art, a video posting user can add subtitles when editing the video before posting the video work, and the added subtitles will be synthesized into the video image. In this way, after posting the video, the user can view the video image and the subtitles at the same time when watching the video. However, the subtitles added to the video image will block the content of the video image and affect the watching effect of the user.

In the embodiment of the present disclosure, the media content image can be separated from the subtitles, and the subtitle information can be flexibly displayed. The first media content can be understood as a media content currently being played in the media content stream playing interface. During playing the first media content, it is possible to not display the subtitle information associated with the first media content in the media content stream playing interface but display a preset character control in the playing image of the first media content in the media content stream playing interface for triggering the display of the subtitle information associated with the first media content. The preset character control contains characters, and the specific types, contents and arrangement of characters are not limited. Illustratively, the shapes of the preset character controls corresponding to different media contents can be different, and the triggerable position of the trigger operation for the preset character control can be determined according to the arrangement of characters.

Optionally, during playing the first media content in the media content stream playing interface, in the case where it is determined that the first media content meets preset subtitle display conditions, the preset character control is displayed in the playing image of the first media content. In the case where it is determined that the first media content does not meet the preset subtitle display conditions, it is possible to not display the preset character control. For example, the preset subtitle display conditions can include at least one of the following: it is detected that the first media content is associated with subtitle resources; it is detected that the media content image of the first media content does not contain subtitles. It can be understood that the subtitle display method of the present disclosure is implemented under the circumstance that the user who posts the work turns on the function of allowing subtitles to be displayed.

Step 102: displaying subtitle information associated with the first media content in a preset area in the media content stream playing interface in response to a trigger operation for the preset character control, wherein the subtitle information associated with the first media content is determined based on speech information in the first media content.

Illustratively, if there is a need to view subtitles, the user can input a trigger operation for the preset character control. The specific type of the trigger operation is not limited, for example, it can be clicking, long pressing, sliding or dragging, or the like. If the trigger operation for the preset character control is received, the subtitle information associated with the first media content is displayed in the preset area in the media content stream playing interface in response to the trigger operation. The sentences in the subtitle information are the words spoken by characters in the media content or the sentences corresponding to the speech information configured in the image-text work, so that the user can intuitively and accurately understand the specific speech content of the characters in the media content or the speech content in the soundtrack or narration by viewing the subtitle information. The subtitle information usually contains a plurality of sentences, and a preset number of sentences or all sentences can be displayed at the same time in the preset area. Optionally, the playing progress of the subtitle information associated with the first media content corresponds to the playing progress of the speech information in the first media content. In this way, the user can understand the speech content more accurately by viewing the subtitle information.

The specific position and size of the preset area are not limited. For example, the preset area can be an area intersecting with the playing area of the first media content, or the preset area can also be an area separated from the playing area of the first media content. The size of the preset area can be a preset fixed size, or the size of the preset area can also be a dynamically determined size. For example, under the circumstance that the occupation size corresponding to the subtitle information is smaller than the preset size threshold, the size of the preset area is positively related to that of the occupation size, which can be determined according to the total number of sentences or characters in the subtitle information.

The information display method provided by the embodiment of the present disclosure comprises: during playing a first media content in a media content stream playing interface, displaying a preset character control in a playing image of the first media content; displaying subtitle information associated with the first media content in a preset area in the media content stream playing interface in response to a trigger operation for the preset character control, wherein the subtitle information associated with the first media content is determined based on speech information in the first media content. By adopting the above technical solution, the media content in the media content stream can be separated from the subtitle information determined according to the speech information in the media content, and when there is a need to view the subtitles, the user can trigger the display of the subtitle information by means of triggering the character control and view the texts corresponding to the character's speech in the media content, so that the display of the subtitles can be flexibly controlled and the needs of the user can be met.

Optionally, after the displaying subtitle information associated with the first media content in a preset area in the media content stream playing interface, the method can further include: displaying a preset close control in the media content stream playing interface, wherein the preset close control is used for triggering cancellation of the display of the subtitle information associated with the first media content in the preset area.

Optionally, the subtitle information associated with the first media content is determined according to text information generated by recognizing the speech information in the first media content, and/or the subtitle information associated with the first media content is determined by an editing operation of the user who posts the first media content. The advantage of this setting lies in that it can enrich the ways for determining the subtitle information.

For the speech recognition way, under the circumstance that the user agrees to display subtitles in this way, it is possible to reduce the requirements for the ability of the media content posting user for editing media content, reduce the editing cost of the media content, and improve the posting efficiency of the media content. After the media content posting user uploads the media content to be posted, if it is recognized that the media content contains speech information, the media content posting user can be provided with an automatic subtitle generation function. If the media content posting user chooses to turn on this function, it is possible to automatically recognize the speech in the media content to be posted and generate corresponding text information, so as to generate subtitle resources, which are stored in association with the media content resources corresponding to the media content to be posted. When the media content is presented to the user, the media content is played by reading the media content resources, and when the subtitle information needs to be displayed in the preset area, the subtitle information is acquired by reading the associated subtitle resources and displayed.

By way of combining speech recognition and user editing, subtitle information can be more in line with user requirements. Optionally, after recognizing the speech in the media content to be posted and generating the corresponding text information, it is possible to receive an editing operation on the text information by the media content posting user, such as modifying texts therein or adding links, and generating the subtitle resources according to the modification result.

In some embodiments, the subtitle information associated with the first media content includes at least one link added by the user who posts the first media content, and the link is used for triggering a jump to an associated interface of the first media content. The advantage of this setting lies in that it can increase the amount of information contained in subtitle information and enrich the functions of subtitle information. For example, in the process of recording a media content, the poster of the media content mentions, by means of speaking, a certain historical media content that he had posted before. In order to help the user find the historical media content quickly, a link (which can be recorded as a media content link) can be added to the corresponding sentence in the subtitle information, so that the user who watches the media content can jump to the playing interface of the historical media content (the associated interface of the media content) by triggering the media content link. If the user mentions a plurality of historical media contents, a plurality of media content links can be added correspondingly, that is, each historical media content corresponds to one media content link. For another example, in the process of recording a media content, the poster of the media content introduces a certain media content author by speech. In order to help the user find the media content author quickly, a link (which can be recorded as a user link) can be added to the corresponding sentence in the subtitle information, so that the user who watches the media content can jump to the personal homepage of the media content author (an associated interface of the media content) by triggering the user link. If the user mentions a plurality of media content authors, a plurality of user links can be added correspondingly. For another example, in the process of recording a media content, the poster of the media content introduces a commodity by speech. In order to help the user find the way to acquire the commodity quickly, a link (which can be recorded as a commodity link) can be added at the corresponding sentence in the subtitle information, so that the user who watches the media content can jump to the details interface of the commodity (the associated interface of the media content) by triggering the commodity link. If the user mentions a plurality of commodities, a plurality of commodity links can be added accordingly.

In some embodiments, before responding to a trigger operation for the preset character control, the media content stream playing interface comprises preset information, the preset area comprises an associated area of the preset character control, and the displaying subtitle information associated with the first media content in a preset area in the media content stream playing interface comprises: hiding at least part of the preset information in the associated area of the preset character control; displaying the subtitle information associated with the first media content in the associated area of the preset character control. The advantage of this setting lies in that at least part of the associated area of the preset character control in the media content playing interface is reused, which is convenient for the user to view preset information or subtitle information according to actual needs, and increases the interface contents that can be displayed in the media content playing interface while reducing the blocking of the media contents, and improves the utilization rate of the interface.

Optionally, the preset information includes associated information of the first media content. For example, the preset information can include, for example, title information or summary information of the first media content, and can also include the user identification of the media content posting user. The above preset information usually has less content, and the user can finish reading the preset information within a short time after starting to play the first media content. Therefore, after the user triggers the preset character control, the display of at least part of the preset information is hidden, and the subtitle information associated with the first media content is displayed in the associated area of the preset character control.

In some embodiments, the preset character control contains preset information. The advantage of this setting lies in that the preset information is also used as the preset character control, which further improves the utilization rate of the media content stream playing interface.

Fig. 2 is a schematic diagram of an interface interaction provided by an embodiment of the present disclosure. As shown in Fig. 2, during playing a first media content in a media content stream playing interface 201, a preset character control 202 is displayed in a playing image of the first media content. The preset character control 202 contains preset information such as the nickname of the media content posting user and the title of the media content. A triggerable position of a trigger operation of the preset character control 202 is determined according to the arrangement of characters, for example, the triggerable position is a position where the characters in the preset information are displayed. At this time, the preset information such as the nickname of the media content posting user and the title of the media content is being displayed in an associated area 203 of the preset character control in the media content stream playing interface 201. When the user triggers the preset character control 202 by means of clicking, sliding or the like, all the preset information is hidden in the associated area 203 of the preset character control, and subtitle information 204 associated with the first media content is displayed. As shown in Fig. 2, optionally, three sentences in the subtitle information can be displayed at the same time, and the sentence with a larger font size in the middle can correspond to the speech information that the character is currently speaking in the media content. Optionally, it is also possible to hide part of the preset information, such as reserving the user identification and hiding the title information. Optionally, after displaying the subtitle information 204, it is possible to change the preset character control, which is equivalent to replacing characters in the preset character control with subtitle information. The changed preset character control is used for triggering the display of the preset information, that is, if the changed preset character control is triggered, the display of the preset information can be resumed, for example, the subtitle information can be hidden in the associated area of the preset character control, and the display of the hidden preset information can be resumed.

In some embodiments, the displaying subtitle information associated with the first media content in a preset area in the media content stream playing interface comprises: adjusting an original playing area corresponding to the first media content to a target playing area in the media content stream playing interface, and displaying the subtitle information associated with the first media content in the preset area in the media content stream playing interface, wherein the size of the target playing area is smaller than that of the original playing area. The advantage of this setting lies in that the reduction of the playing area of the media content can reduce the blocking of the subtitle information on the media content or enable the user to view more subtitle information while the user watching the media content and the subtitle information. Optionally, the target playing area and the preset area are separated from each other.

Optionally, while adjusting an original playing area corresponding to the first media content to a target playing area in the media content stream playing interface, the method also includes: hiding a preset interaction control.

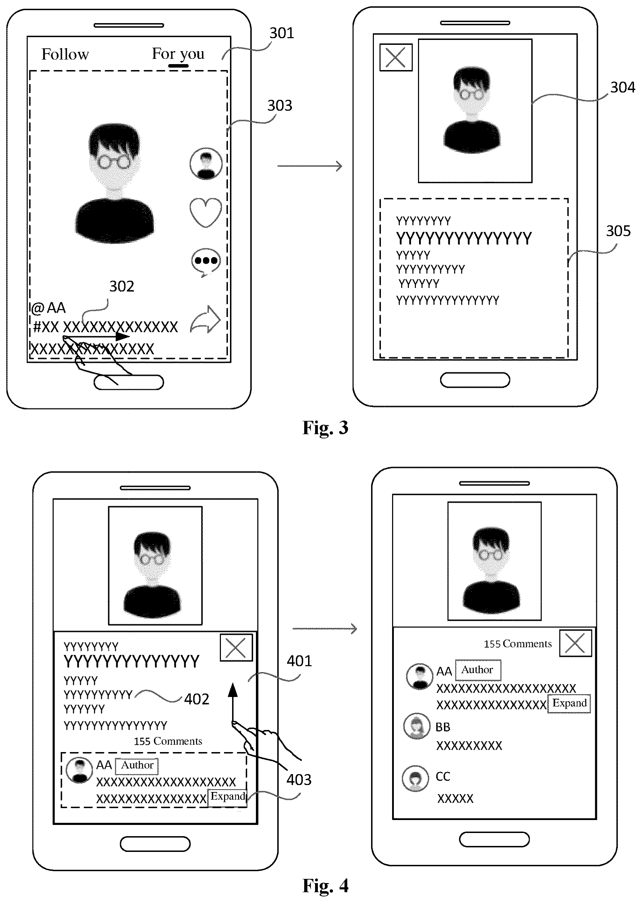

Fig. 3 is a schematic diagram of another interface interaction provided by an embodiment of the present disclosure. As shown in Fig. 3, during playing a first media content in a media content stream playing interface 301, a preset character control 302 is displayed, which contains a title of the media content (that is, the preset information). After the user inputs a right sliding operation for the preset character control 302, an original playing area 303 corresponding to the first media content is adjusted to a target playing area 304, and the size of the target playing area 304 is smaller than that of the original playing area 303 and subtitle information associated with the first media content is displayed in a preset area 305. Optionally, it is also possible to further hide interface labels (such as "follow" and "recommend" in the figure) and preset interaction controls such as a user avatar, a like control, a comment control and a forward control.

Optionally, because the size of the target playing area is smaller than that of the original playing area, the preset area can take a higher proportion in the media content stream playing interface, and the number of sentences of subtitle information that are displayed at the same time in the preset area can be more than that in Fig. 2. As shown in Fig. 3, if there is a small amount of speech information in the media content, the effect of full-text display of subtitle information can be realized.

In some embodiments, the preset area comprises a preset type information displaying panel of the first media content, and the displaying subtitle information associated with the first media content in a preset area in the media content stream playing interface comprises: presenting the preset type information displaying panel in the media content stream playing interface, and displaying the subtitle information associated with the first media content in the preset type information displaying panel. The advantage of this setting lies in that the preset type information displaying panel is also used to present the subtitle information.

In some embodiments, the displaying the subtitle information associated with the first media content in the preset type information displaying panel comprises: displaying the subtitle information associated with the first media content and preset type information in the form of information stream in a first target area in the preset type information displaying panel. The advantage of this setting lies in that the preset type information displaying panel is also used to present the subtitle information, and the subtitle information and the preset type information are displayed in the form of information stream, thus improving the fluency of information browsing of the user.

Optionally, the preset type information may be comment information, namely the comment information associated with the first media content, and the corresponding preset type information displaying panel can be a comment panel. The form of information stream can be understood as information that is moved and displayed in the same direction following the user's operation. For example, after the user inputs an information stream switching operation (such as a sliding operation), the subtitle information and the comment information can be moved and displayed in the same direction following the direction and speed of the user's sliding operation.

Fig. 4 is a schematic diagram of yet another interface interaction provided by an embodiment of the present disclosure. As shown in Fig. 4, subtitle information 402 is displayed in a preset type information displaying panel 401. If the subtitle information 402 does not occupy completely the displaying space of the preset type information displaying panel 401, the preset type information, such as the comment information 403, can be displayed below the subtitle information 402. If there are many sentences in the subtitle information 402 which can occupy completely the displaying space of the preset type information displaying panel 401, all the displaying space of the preset type information displaying panel 401 can be used for displaying the subtitle information. After inputting an up sliding operation to the preset type information displaying panel 401, the user can control the subtitle information and the comment information to be moved up and displayed according to the direction of the up sliding operation, and then more comment information can be displayed.

In some embodiments, after the displaying subtitle information associated with the first media content in a preset area in the media content stream playing interface, the method further includes: displaying a preset control; switching from the media content stream playing interface to a target interface in response to a trigger operation for the preset control, continuing to play the first media content in a preset playing area in the target interface, and displaying the subtitle information associated with the first media content in a second target area in the target interface, wherein the size of the target area is larger than that of the preset area. The advantage of this setting lies in that after the subtitle information is displayed in the preset area, if the user needs to view more subtitle information, he can enter the target interface by means of triggering the preset control. In the target interface, the size of the target area for displaying the subtitle information is larger than that of the preset area, so more subtitle information can be displayed.

In some embodiments, the second target area comprises a preset type information displaying panel of the first media content, and the displaying the subtitle information associated with the first media content in a second target area in the target interface comprises: presenting a preset type information displaying panel in the target interface, and displaying the subtitle information associated with the first media content in the preset type information displaying panel. The advantage of this setting lies in that the preset type information displaying panel is also used to present the subtitle information.

In some embodiments, the displaying the subtitle information associated with the first media content in the preset type information displaying panel comprises: displaying the subtitle information associated with the first media content and the preset type information in the form of information stream in a third target area in the preset type information displaying panel. The advantage of this setting lies in that the preset type information displaying panel is also used to present the subtitle information, and the subtitle information and the preset type information are displayed in the form of information stream, thus improving the fluency of information browsing of the user.

In some embodiments, after the displaying subtitle information associated with the first media content in a preset area in the media content stream playing interface, the method further comprises: determining a target subtitle position in response to a positioning operation for the subtitle information associated with the first media content; adjusting the current playing progress of the speech information in the first media content to a target playing time associated with the target subtitle position. The advantage of this setting lies in that the user can quickly preview the speech information in the media content by viewing the subtitle information, so as to understand an overview of the media content, and can quickly jump to a playing position of the media content that he wants to watch by positioning the subtitle information, which improves the viewing efficiency and screening efficiency of the media content information.

Optionally, the positioning operation for the subtitle information associated with the first media content includes a sliding operation and/or a clicking operation for the subtitle information. The advantage of this setting lies in that it can improve the convenience of the positioning operation.

Optionally, in the displayed subtitle information, sentences corresponding to the speech information that the character is currently speaking in the media content can be highlighted, such as by increasing the font size as illustrated previously in Fig. 2, or by changing the font or color. A sentence position for positioning can be previously set and recorded as a preset position, and the sentence at the preset position corresponds to the speech information that the character is currently speaking in the media content. In this way, the user can move the sentence to be positioned to the preset position by sliding, dragging, or other operation. The relative position of the sentence at the preset position in the subtitle information is recorded as the target subtitle position, and the corresponding playing time can be found in the first media content according to the target subtitle position, and recorded as a target playing time. The current playing progress of the first media content is adjusted to the target playing time, so that the adjustment of the progress of the media content based on subtitle information can be quickly realized. Optionally, if the user inputs a clicking operation for the target sentence in the currently displayed subtitle information, the relative position of the target sentence in the subtitle information is recorded as the target subtitle position.

In some embodiments, after the displaying subtitle information associated with the first media content in a preset area in the media content stream playing interface, the method further comprises: displaying a preset function control in response to a selecting operation for a target text in the subtitle information associated with the first media content, wherein the preset function control is used for triggering a preset function acting on the target text. The advantage of this setting lies in that related functions can be expanded for part of texts in the subtitle information, which provides convenience for the user.

Illustratively, the preset functions include at least one of translation, copying, collection and forwarding. The target text can be one or more characters, one or more words, one or more sentences, and etc. in the subtitle information.

In some embodiments, after the displaying subtitle information associated with the first media content in a preset area in the media content stream playing interface, the method further comprises: switching to play a second media content in the media content stream playing interface in response to a media content switching operation, and displaying the subtitle information associated with the second media content in the preset area. The advantage of this setting lies in that under the circumstance that the user actively triggers the displaying of the subtitle information associated with the first media content, it can be considered that there is a current need for the user to view the subtitle information, and when switching to a last media content or a next media content, the associated subtitle information can be automatically displayed, which reduces the manual operations of the user.

Optionally, in response to the media content switching operation, switch to play the second media content in the media content stream playing interface, and in the case where it is detected that the number of times that the user continuously triggers the preset character controls corresponding to different media contents reaches the preset times threshold, the subtitle information associated with the second media content is displayed in the preset area. The continuous triggering can be understood as triggering all the preset character controls corresponding to different media contents played in sequence in the media content stream playing interface. For example, media content 1, media content 2, media content 3 and media content 4 are played in sequence, and the preset times threshold is 2, and if the preset character controls are displayed when media content 1 and media content 3 are played, the preset character control is not displayed when media content 2 is played, and the user triggers the preset character controls corresponding to media content 1 and media content 3 (first media content), then when media content 4 (second media content) is played, subtitle information associated with media content 4 is displayed in the preset area.

Optionally, after the switching from the media content stream playing interface to a target interface, the method further comprises: switching to play a second media content in the preset playing area of the target interface in response to a media content switching operation, and displaying subtitle information associated with the second media content in the target area of the target interface. The advantage of this setting lies in that media content switching in the target interface can be realized.

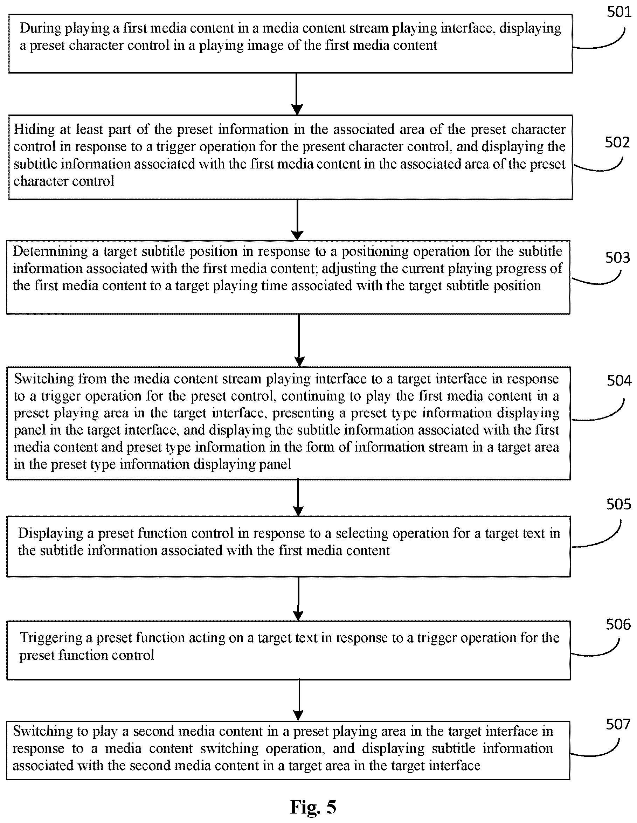

Fig. 5 is a schematic flow diagram of another information display method provided by an embodiment of the present disclosure. The embodiment of the present disclosure is optimized in form of various alternatives in the above embodiment. Specifically, the method includes the following steps:
Step 501: during playing a first media content in a media content stream playing interface, displaying a preset character control in a playing image of the first media content.

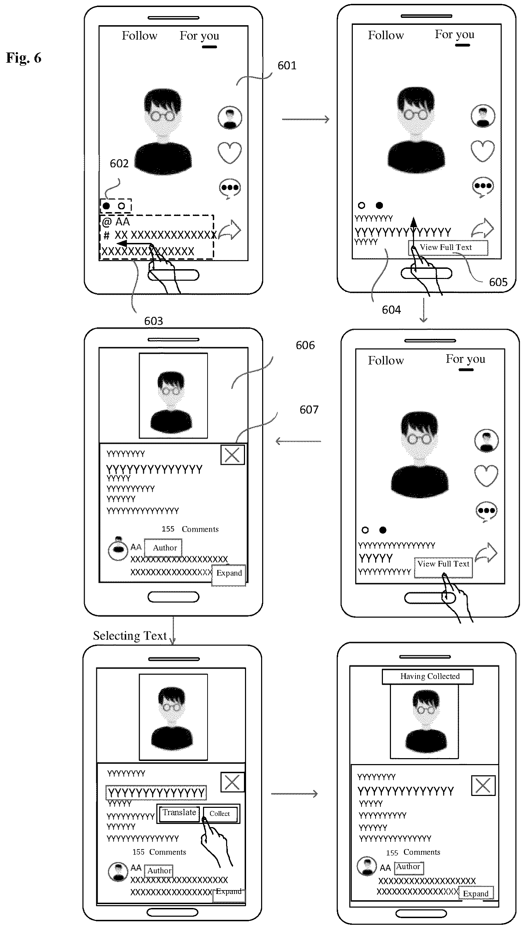

Fig. 6 is a schematic diagram of yet another interface interaction provided by an embodiment of the present disclosure. As shown in Fig. 6, during playing a first media content in a media content stream playing interface 601, a preset switching identification 602 and a preset character control 603 are displayed. The preset switching identification 602 contains two dot identifications, and the solid dot is used to represent the current displaying content in the associated area of the preset character control. Illustratively, in the initial playing state of the first media content, the initial displaying content of the associated area of the preset character control is preset information, such as the nickname of the poster of the first media content and the title of the media content in Fig. 6.

Step 502: hiding at least part of the preset information in the associated area of the preset character control in response to a trigger operation for the preset character control, and displaying the subtitle information associated with the first media content in the associated area of the preset character control.

As shown in Fig. 6, when the user inputs a left sliding operation for the preset character control 603, the displaying of the preset information is switched to the displaying of the subtitle information 604 associated with the first media content in the associated area of the preset character control, such as the three lines of sentences in Fig. 6, and a preset control 605 is displayed, such as the "View Full Text" button in Fig. 6.

Step 503: determining a target subtitle position in response to a positioning operation for the subtitle information associated with the first media content; adjusting the current playing progress of the first media content to a target playing time associated with the target subtitle position.

As shown in Fig. 6, after the user inputs an up sliding operation (positioning operation) for the subtitle information 604, the sentence in the middle line is determined as the target subtitle position, so that the playing progress of the first media content jumps to the target playing time associated with the target subtitle position, which realizes the quick adjustment of the playing progress.

Step 504: switching from the media content stream playing interface to a target interface in response to a trigger operation for the preset control, continuing to play the first media content in a preset playing area in the target interface, presenting a preset type information displaying panel in the target interface, and displaying the subtitle information associated with the first media content and preset type information in the form of information stream in a target area in the preset type information displaying panel.

The size of the target area is larger than that of the preset area.

As shown in Fig. 6, after triggering the preset control 605 by clicking or other means, the user switches to a target interface 606, continues to play the first media content in a preset playing area in the target interface 606, presents a preset type information displaying panel 607, and displays the subtitle information associated with the first media content and the preset information in the form of information stream in the target area of the preset type information displaying panel 607. The size of the target area is larger than that of the preset area, so more subtitle information can be displayed.

Optionally, in the target interface, it is also possible to input a positioning operation for the subtitle information associated with the first media content, so as to realize the quick adjustment of the playing progress in the target interface. For example, when a sliding operation acts on the subtitle information (for example, the starting position of the sliding operation falls within the display range of the subtitle information), it is a positioning operation, and when the sliding operation acts on a blank area of the preset type information displaying panel (for example, the starting position of the sliding operation falls within the blank area), it is an information stream switching operation.

Step 505: displaying a preset function control in response to a selecting operation for a target text in the subtitle information associated with the first media content.

The preset function control is used for triggering a preset function acting on the target text.

Illustratively, the user can input a long pressing or other operations for subtitle information, trigger a text selection function, and determine the selected text by adjusting the cursor or other means to obtain the target text, so as to display the preset function control. As shown in Fig. 6, the preset function control can include a translate button and a collect button.

Optionally, the selecting operation can also act on the subtitle information displayed in the preset area, so that the preset function control can be displayed in the media content playing interface.

Step 506: triggering a preset function acting on a target text in response to a trigger operation for the preset function control.

Illustratively, as shown in Fig. 6, if the user clicks the collect button, the target text selected by the user will be collected, which is convenient for the user to view the collected subtitle text in the future. Optionally, a notification message, such as "Collect Successfully", can also be displayed to remind the user that the target text has been successfully collected.

Step 507: switching to play a second media content in a preset playing area in the target interface in response to a media content switching operation, and displaying subtitle information associated with the second media content in a target area in the target interface.

Illustratively, in the target interface, the media content switching operation can be a sliding operation acting on a media content image being played, or a sliding operation acting on a blank area on left and right sides of the first media content as shown in Fig. 6, or the like. After receiving the media content switching operation, such as an up sliding operation, it is possible to switch to display a next media content, that is, the second media content, in the preset playing area, and display the subtitle information associated with the second media content in the target area.

According to the information display method provided by the embodiment of the present disclosure, the image of the media content in the media content stream can be separated from the subtitle information corresponding to the speech information. When the user needs to view the subtitles, it is also possible to switch from the displaying of the preset information to the displaying of the subtitle information in the preset area by means of triggering a control, so that the user can view the texts corresponding to the speech of the character in the media content; it is also possible to switch to the target interface to view more subtitle information, and flexibly control the playing progress of the media content by positioning subtitles; it is also possible to trigger the displaying of the preset function control by selecting part of subtitle information, thus enriching the functions of subtitle information.

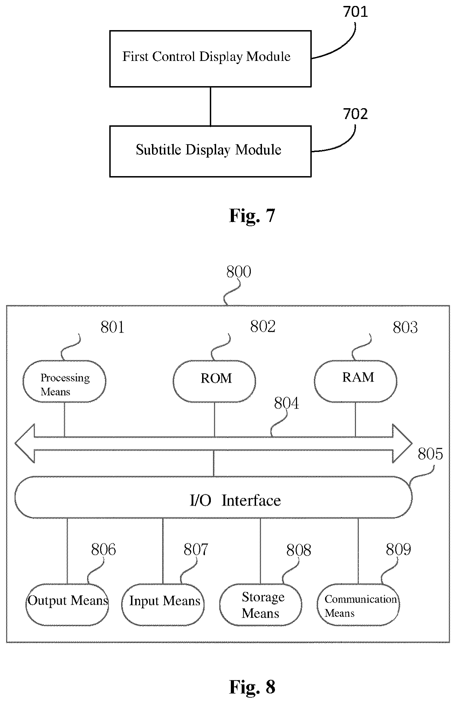

Fig. 7 is a schematic structural diagram of an information display apparatus provided by an embodiment of the present disclosure. As shown in Fig. 7, the apparatus includes:
a first control display module 701 for displaying, during playing a first media content in a media content stream playing interface, a preset character control in a playing image of the first media content;
a subtitle display module 702 for displaying subtitle information associated with the first media content in a preset area in the media content stream playing interface in response to a trigger operation for the preset character control, wherein the subtitle information associated with the first media content is determined based on speech information in the first media content.

The information display apparatus provided by the embodiment of the present disclosure displays, during playing a first media content in a media content stream playing interface, a preset character control in a playing image of the first media content, and displays subtitle information associated with the first media content in a preset area in the media content stream playing interface in response to a trigger operation for the preset character control, wherein the subtitle information associated with the first media content is determined based on speech information in the first media content. By adopting the above technical solution, the media content in the media content stream can be separated from the subtitle information determined according to the speech information in the media content, and when there is a need to view the subtitles, the user can trigger the displaying of the subtitle information by means of triggering the character control to view the texts corresponding to the speech of the character in the media content, so that the displaying of the subtitles can be flexibly controlled and the needs of the user can be met.

Optionally, before responding to a trigger operation for the preset character control, the media content stream playing interface comprises preset information, the preset area comprises an associated area of the preset character control, and the subtitle display module comprises:
a preset information hiding unit for hiding at least part of the preset information in the associated area of the preset character control in response to a trigger operation for the preset character control;
a subtitle display unit for displaying the subtitle information associated with the first media content in the associated area of the preset character control.

Optionally, the preset character control contains the preset information.

Optionally, the preset information includes associated information of the first media content.

Optionally, the subtitle display module is specifically used for: adjusting an original playing area corresponding to the first media content to a target playing area in the media content stream playing interface in response to a trigger operation for the preset character control, and displaying the subtitle information associated with the first media content in the preset area in the media content stream playing interface, wherein the size of the target playing area is smaller than that of the original playing area.

Optionally, the preset area comprises a preset type information displaying panel of the first media content, and the displaying subtitle information associated with the first media content in a preset area in the media content stream playing interface comprises: presenting the preset type information displaying panel in the media content stream playing interface, and displaying the subtitle information associated with the first media content in the preset type information displaying panel.

Optionally, the displaying the subtitle information associated with the first media content in the preset type information displaying panel comprises: displaying the subtitle information associated with the first media content and preset type information in the form of information stream in a first target area in the preset type information displaying panel.

Optionally, the apparatus further includes:
a second control display module for displaying a preset control after the displaying subtitle information associated with the first media content in a preset area in the media content stream playing interface;
a play module for switching from the media content stream playing interface to a target interface in response to a trigger operation for the preset control, and continuing to play the first media content in a preset playing area in the target interface;
a subtitle module for displaying the subtitle information associated with the first media content in a second target area in the target interface, wherein the size of the target area is larger than that of the preset area.

Optionally, the second target area includes a preset type information displaying panel of the first media content, and the subtitle module is specifically used for:
presenting a preset type information displaying panel in the target interface, and displaying the subtitle information associated with the first media content in the preset type information displaying panel.

Optionally, the displaying the subtitle information associated with the first media content in the preset type information displaying panel comprises: displaying the subtitle information associated with the first media content and preset type information in the form of information stream in a third target area in the preset type information displaying panel.

Optionally, the playing progress of the subtitle information associated with the first media content corresponds to the playing progress of the speech information in the first media content.

Optionally, the apparatus further comprises:
a target subtitle position determination module for determining a target subtitle position in response to a positioning operation for the subtitle information associated with the first media content, after the displaying subtitle information associated with the first media content in a preset area in the media content stream playing interface;
a playing progress adjustment module for adjusting the current playing progress of the speech information in the first media content to a target playing time associated with the target subtitle position.

Optionally, the positioning operation for the subtitle information associated with the first media content comprises a sliding operation and/or a clicking operation for the subtitle information.

Optionally, the apparatus further comprises: a function control display module for displaying a preset function control in response to a selecting operation for a target text in the subtitle information associated with the first media content, after displaying subtitle information associated with the first media content in a preset area in the media content stream playing interface, wherein the preset function control is used for triggering a preset function acting on the target text.

Optionally, the apparatus further includes: a media content switching module for, after the displaying subtitle information associated with the first media content in a preset area in the media content stream playing interface, switching to play a second media content in the media content stream playing interface in response to a media content switching operation, and displaying subtitle information associated with the second media content in the preset area.

Optionally, the subtitle information associated with the first media content is determined according to text information generated after the speech information in the first media content is recognized, and/or the subtitle information associated with the first media content is determined by an editing operation of the user who posts the first media content.

Optionally, the subtitle information associated with the first media content comprises at least one link added by the user who posts the first media content, and the link is used for triggering a jump to an associated interface of the first media content.

The information display apparatus provided by the embodiment of the present disclosure can execute the information display method provided by any embodiment of the present disclosure, and has corresponding functional modules for executing the method and beneficial effects.

It is worth noting that each unit and module included in the above apparatus is only divided according to the functional logic, but it is not limited to the above division, as long as the corresponding functions can be realized. In addition, the specific name of each functional unit is only for the convenience of distinguishing each other, and is not used to limit the protection scope of the embodiments of the present disclosure.

Fig. 8 is a schematic structural diagram of an electronic device provided by an embodiment of the present disclosure. Reference is now made to Fig. 8, which shows a schematic structural diagram of an electronic device (such as a terminal device or a server in Fig. 8) 800 suitable for implementing the embodiment of the present disclosure. The terminal device in the embodiment of the present disclosure can include, but is not limited to, mobile terminals such as mobile phone, notebook computer, digital broadcast receiver, Personal Digital Assistant (PDA), Tablet Computer (PAD), Portable Multimedia Player (PMP), and vehicle-mounted terminals (such as a vehicle-mounted navigation terminal), as well as fixed terminals such as digital TV and desktop computer. The electronic device shown in Fig. 8 is only an example, and should not bring any limitation to the functions and application scope of the embodiment of the present disclosure.

As shown in Fig. 8, the electronic means 800 can include a processing means (such as a central processor, a graphics processor) 801, which can perform various appropriate actions and processes according to a program stored in a Read-Only Memory (ROM) 802 or a program loaded from a storage means 808 into a Random Access Memory (RAM) 803. In the RAM 803, various programs and data required for the operation of the electronic means 800 are also stored. The processing means 801, the ROM 802 and the RAM 803 are connected to each other through a bus 804. An edit/output (I/O) interface 805 is also connected to the bus 804.

Generally, the following means can be connected to the I/O interface 805: an input means 806 including, for example, a touch screen, a touch pad, a keyboard, a mouse, a camera, a microphone, an accelerometer, a gyroscope; an output means 807 including, for example, a liquid crystal display (LCD), a speaker, a vibrator; a storage means 808 including, for example, a magnetic tape, a hard disk; and a communication means 809. The communication means 809 can allow the electronic means 800 to perform wireless or wired communication with other devices to exchange data. Although Fig. 8 shows the electronic means 800 with various means, it should be understood that it is not required to implement or provide all the means shown. More or fewer means can alternatively be implemented or provided.

In particular, according to the embodiment of the present disclosure, the process described above with reference to the flow diagram can be implemented as a computer software program. For example, an embodiment of the present disclosure includes a computer program product including a computer program carried on a nontransitory computer-readable medium, which contains program codes for executing the method shown in the flow diagram. In such an embodiment, the computer program can be downloaded and installed from the network through the communication means 809, or installed from the storage means 808, or installed from the ROM 802. When the computer program is executed by the processing means 801, the above functions defined in the method of the embodiment of the present disclosure are performed.

Names of messages or information exchanged among a plurality of means in the implementations of the present disclosure are only used for illustrative purposes, and are not used to limit the scope of these messages or information.

The electronic device provided by the embodiment of the present disclosure belongs to the same inventive concept as the information display method provided by the above embodiment, and the technical details not described in detail in the present embodiment can refer to the above embodiment, and the present embodiment has the same beneficial effects as the above embodiment.

An embodiment of the present disclosure provides a computer storage medium storing thereon a computer program, which, when executed by a processor, implements the information display method provided in the above embodiment.

It should be noted that the computer-readable medium mentioned above in the present disclosure can be a computer-readable signal medium or a computer-readable storage medium or any combination of the two. The computer-readable storage medium can be, for example, but not limited to, an electrical, magnetic, optical, electromagnetic, infrared, or semiconductor system, apparatus or device, or a combination of any of the above. More specific examples of the computer-readable storage medium can include, but are not limited to, an electrical connection with one or more wires, a portable computer disk, a hard disk, a Random Access Memory (RAM), a Read-Only Memory (ROM), an Erasable Programmable Read-Only Memory (EPROM or flash memory), an optical fiber, a portable Compact Disk Read-Only Memory (CD-ROM), an optical storage device, a magnetic storage device, or any suitable combination of the above. In the present disclosure, the computer-readable storage medium can be any tangible medium containing or storing a program, which can be used by or in combination with an instruction execution system, apparatus or device. In the present disclosure, the computer-readable signal medium can include a data signal propagated in baseband or as part of a carrier wave, in which computer-readable program codes are carried. This propagated data signal can take many forms, including but not limited to an electromagnetic signal, an optical signal or any suitable combination of the above. The computer-readable signal medium can also be any computer-readable medium other than the computer-readable storage medium, which can send, propagate or transmit a program for use by or in connection with an instruction execution system, apparatus or device. The program codes contained in the computer-readable medium can be transmitted by any suitable medium, including but not limited to: an electric wire, an optical cable, RF (radio frequency) and the like, or any suitable combination of the above.

In some implementations, a client and a server can communicate by using any currently known or future developed network protocol such as HyperText Transfer Protocol (HTTP), and can be interconnected with digital data communication in any form or medium (for example, a communication network). Examples of the communication network include a Local Area Network ("LAN"), a Wide Area Network ("WAN"), the Internet (for example, the Internet) and end-to-end networks (for example, ad hoc end-to-end networks), as well as any currently known or future developed networks.

The above computer-readable medium can be contained in the above electronic device; or it can exist alone without being assembled into the electronic device.

The above computer-readable medium carries one or more programs which, when executed by the electronic device, cause the electronic device to: during playing a first media content in a media content stream playing interface, display a preset character control in a playing image of the first media content; display subtitle information associated with the first media content in a preset area in the media content stream playing interface in response to a trigger operation for the preset character control, wherein the subtitle information associated with the first media content is determined based on speech information in the first media content.

Computer program codes for performing the operations of the present disclosure can be written in one or more programming languages or a combination thereof, including but not limited to object-oriented programming languages, such as Java, Smalltalk, C++, and conventional procedural programming languages, such as "C" language or similar programming languages. The program codes can be completely executed on the user computer, partially executed on the user computer, executed as an independent software package, partially executed on the user computer and partially executed on a remote computer, or completely executed on the remote computer or a server. In the case involving a remote computer, the remote computer can be connected to a user computer through any kind of network, including a Local Area Network (LAN) or a Wide Area Network (WAN), or can be connected to an external computer (for example, through the Internet using an Internet service provider).

The flow diagrams and block diagrams in the drawings illustrate the architecture, functions and operations of possible implementations of the system, method and computer program product according to various embodiments of the present disclosure. In this regard, each block in the flow diagrams or block diagrams can represent a module, a program segment, or a part of codes that contains one or more executable instructions for implementing specified logical functions. It should also be noted that in some alternative implementations, the functions noted in the blocks can occur in a different order than those noted in the drawings. For example, two blocks shown in succession can actually be executed substantially in parallel, and they can sometimes be executed in the reverse order, depending on the functions involved. It should also be noted that each or a combination of blocks in the block diagrams and/or flow diagrams can be implemented by a dedicated hardware-based system that performs specified functions or operations, or by a combination of dedicated hardware and computer instructions.

The involved units described in the embodiments of the present disclosure can be implemented by software or hardware. In some cases, the name of the module does not limit the module itself. For example, the first control display module can also be described as "a module for displaying, during playing a first media content in a media content stream playing interface, a preset character control in a playing image of the first media content".

The functions described above herein can be at least partially performed by one or more hardware logic components. For example, without limitation, exemplary types of hardware logic components that can be used include: a Field Programmable Gate Array (FPGA), an Application Specific Integrated Circuit (ASIC), an Application Specific Standard Product (ASSP), a System on Chip (SOC), a Complex Programmable Logic Device (CPLD) and so on.

In the context of the present disclosure, a machine-readable medium can be a tangible medium that can contain or store a program for use by or in connection with an instruction execution system, apparatus or device. The machine-readable medium can be a machine-readable signal medium or a machine-readable storage medium. The machine-readable medium can include, but is not limited to, an electronic, magnetic, optical, electromagnetic, infrared, or semiconductor system, apparatus or device, or any suitable combination of the above. More specific examples of the machine-readable storage medium will include an electrical connection based on one or more lines, a portable computer disk, a hard disk, a Random Access Memory (RAM), a Read-Only Memory (ROM), an Erasable Programmable Read-Only Memory (EPROM or flash memory), an optical fiber, a convenient Compact Disk Read-Only Memory (CD-ROM), an optical storage device, a magnetic storage device, or any suitable combination of the above.

According to one or more embodiments of the present disclosure, there is provided an information display method, including:
during playing a first media content in a media content stream playing interface, displaying a preset character control in a playing image of the first media content;
displaying subtitle information associated with the first media content in a preset area in the media content stream playing interface in response to a trigger operation for the preset character control, wherein the subtitle information associated with the first media content is determined based on speech information in the first media content.

According to one or more embodiments of the present disclosure, before responding to a trigger operation for the preset character control, the media content stream playing interface comprises preset information, the preset area comprises an associated area of the preset character control, and the displaying subtitle information associated with the first media content in a preset area in the media content stream playing interface comprises:
hiding at least part of the preset information in the associated area of the preset character control;
displaying the subtitle information associated with the first media content in the associated area of the preset character control.

According to one or more embodiments of the present disclosure, the preset character control contains the preset information.

According to one or more embodiments of the present disclosure, the preset information comprises associated information of the first media content.

According to one or more embodiments of the present disclosure, the displaying subtitle information associated with the first media content in a preset area in the media content stream playing interface comprises:
adjusting an original playing area corresponding to the first media content to a target playing area in the media content stream playing interface, and displaying the subtitle information associated with the first media content in the preset area in the media content stream playing interface, wherein the size of the target playing area is smaller than that of the original playing area.

According to one or more embodiments of the present disclosure, the preset area comprises a preset type information displaying panel of the first media content, and the displaying subtitle information associated with the first media content in a preset area in the media content stream playing interface comprises:
presenting the preset type information displaying panel in the media content stream playing interface, and displaying the subtitle information associated with the first media content in the preset type information displaying panel.

According to one or more embodiments of the present disclosure, the displaying the subtitle information associated with the first media content in the preset type information displaying panel comprises:
displaying the subtitle information associated with the first media content and preset type information in the form of information stream in a first target area in the preset type information displaying panel.

According to one or more embodiments of the present disclosure, after the displaying subtitle information associated with the first media content in a preset area in the media content stream playing interface, the method further comprises:
displaying a preset control;
switching from the media content stream playing interface to a target interface in response to a trigger operation for the preset control, continuing to play the first media content in a preset playing area in the target interface, and displaying the subtitle information associated with the first media content in a second target area in the target interface, wherein the size of the target area is larger than that of the preset area.

According to one or more embodiments of the present disclosure, the second target area comprises a preset type information displaying panel of the first media content, and the displaying the subtitle information associated with the first media content in a second target area in the target interface comprises:
presenting a preset type information displaying panel in the target interface, and displaying the subtitle information associated with the first media content in the preset type information displaying panel.

According to one or more embodiments of the present disclosure, the displaying the subtitle information associated with the first media content in the preset type information displaying panel comprises:
displaying the subtitle information associated with the first media content and preset type information in the form of information stream in a third target area in the preset type information displaying panel.

According to one or more embodiments of the present disclosure, the playing progress of the subtitle information associated with the first media content corresponds to the playing progress of the speech information in the first media content.

According to one or more embodiments of the present disclosure, after the displaying subtitle information associated with the first media content in a preset area in the media content stream playing interface, the method further comprises:
determining a target subtitle position in response to a positioning operation for the subtitle information associated with the first media content;
adjusting the current playing progress of the speech information in the first media content to a target playing time associated with the target subtitle position.

According to one or more embodiments of the present disclosure, the positioning operation for the subtitle information associated with the first media content comprises a sliding operation and/or a clicking operation for the subtitle information.

According to one or more embodiments of the present disclosure, after the displaying subtitle information associated with the first media content in a preset area in the media content stream playing interface, the method further comprises:
displaying a preset function control in response to a selecting operation for a target text in the subtitle information associated with the first media content, wherein the preset function control is used for triggering a preset function acting on the target text.

According to one or more embodiments of the present disclosure, after the displaying subtitle information associated with the first media content in a preset area in the media content stream playing interface, the method further comprises:
switching to play a second media content in the media content stream playing interface in response to a media content switching operation, and displaying subtitle information associated with the second media content in the preset area.

According to one or more embodiments of the present disclosure, the subtitle information associated with the first media content is determined according to text information generated after the speech information in the first media content is recognized, and/or the subtitle information associated with the first media content is determined by an editing operation of the user who posts the first media content.

According to one or more embodiments of the present disclosure, the subtitle information associated with the first media content comprises at least one link added by the user who posts the first media content, and the link is used for triggering a jump to an associated interface of the first media content.

According to one or more embodiments of the present disclosure, there is provided an information display apparatus, comprising:
a first control display module for displaying, during playing a first media content in a media content stream playing interface, a preset character control in a playing image of the first media content;
a subtitle display module for displaying subtitle information associated with the first media content in a preset area in the media content stream playing interface in response to a trigger operation for the preset character control, wherein the subtitle information associated with the first media content is determined based on speech information in the first media content.

According to one or more embodiments of the present disclosure, there is provided an electronic device, which comprises:
one or more processors;
a storage means for storing one or more programs,
wherein the one or more programs, when executed by the one or more processors, cause the one or more processors to implement the information display method provided by the embodiment of the present disclosure.

According to one or more embodiments of the present disclosure, there is provided a storage medium containing computer-executable instructions, wherein the computer-executable instructions, when executed by a computer processor, are used to perform the information display method provided by the embodiment of the present disclosure.

The above description is only the preferred embodiments of the present disclosure and the explanation of the applied technical principles. It should be understood by those skilled in the art that the disclosure scope involved in the present disclosure is not limited to the technical solution formed by the specific combination of the above technical features, but also covers other technical solutions formed by any combination of the above technical features or their equivalent features without departing from the above disclosure concept, for example, the technical solution formed by the mutual replacement of the above features and the technical features with similar functions disclosed in the present disclosure (but not limited to these technical features).

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of an individual embodiment can also be implemented in combination in a single embodiment. On the contrary, various features described in the context of a single embodiment can also be implemented in a plurality of embodiments individually or in any suitable sub-combination.

Although the present subject matter has been described in language specific to structural features and/or methodological logical actions, it should be understood that the subject matter defined in the appended Claims is not necessarily limited to the specific features or actions described above. On the contrary, the specific features and actions described above are only exemplary forms of implementing the Claims.

## Claims

1. An information display method, comprising:
during playing a first media content in a media content stream playing interface, displaying a preset character control in a playing image of the first media content; and
displaying subtitle information associated with the first media content in a preset area in the media content stream playing interface in response to a trigger operation for the preset character control, wherein the subtitle information associated with the first media content is determined based on speech information in the first media content.

2. The method according to Claim 1, wherein, before responding to a trigger operation for the preset character control, the media content stream playing interface comprises preset information, the preset area comprises an associated area of the preset character control, and the displaying subtitle information associated with the first media content in a preset area in the media content stream playing interface comprises:
hiding at least part of the preset information in the associated area of the preset character control; and
displaying the subtitle information associated with the first media content in the associated area of the preset character control.

3. The method according to Claim 2, wherein the preset character control contains the preset information.

4. The method according to Claim 3, wherein the preset information comprises associated information of the first media content.

5. The method according to Claim 1, wherein the displaying subtitle information associated with the first media content in a preset area in the media content stream playing interface comprises:
adjusting an original playing area corresponding to the first media content to a target playing area in the media content stream playing interface, and displaying the subtitle information associated with the first media content in the preset area in the media content stream playing interface, wherein the size of the target playing area is smaller than that of the original playing area.

6. The method according to Claim 5, wherein the preset area comprises a preset type information displaying panel of the first media content, and the displaying subtitle information associated with the first media content in a preset area in the media content stream playing interface comprises:
presenting the preset type information displaying panel in the media content stream playing interface, and displaying the subtitle information associated with the first media content in the preset type information displaying panel.

7. The method according to Claim 6, wherein the displaying the subtitle information associated with the first media content in the preset type information displaying panel comprises:
displaying the subtitle information associated with the first media content and preset type information in the form of information stream in a first target area in the preset type information displaying panel.

8. The method according to Claim 1, wherein, after the displaying subtitle information associated with the first media content in a preset area in the media content stream playing interface, the method further comprises:
displaying a preset control;
switching from the media content stream playing interface to a target interface in response to a trigger operation for the preset control, continuing to play the first media content in a preset playing area in the target interface, and displaying the subtitle information associated with the first media content in a second target area in the target interface, wherein the size of the target area is larger than that of the preset area.

9. The method according to Claim 8, wherein the second target area comprises a preset type information displaying panel of the first media content, and the displaying the subtitle information associated with the first media content in a second target area in the target interface comprises:
presenting the preset type information displaying panel in the target interface, and displaying the subtitle information associated with the first media content in the preset type information displaying panel.

10. The method according to Claim 9, wherein the displaying the subtitle information associated with the first media content in the preset type information displaying panel comprises:
displaying the subtitle information associated with the first media content and the preset type information in the form of information stream in a third target area in the preset type information displaying panel.

11. The method according to Claim 1, wherein the playing progress of the subtitle information associated with the first media content corresponds to the playing progress of the speech information in the first media content.

12. The method according to Claim 11, wherein, after the displaying subtitle information associated with the first media content in a preset area in the media content stream playing interface, the method further comprises:
determining a target subtitle position in response to a positioning operation for the subtitle information associated with the first media content;
adjusting the current playing progress of the speech information in the first media content to a target playing time associated with the target subtitle position.

13. The method according to Claim 12, wherein, the positioning operation for the subtitle information associated with the first media content comprises a sliding operation and/or a clicking operation for the subtitle information.

14. The method according to Claim 1, wherein, after the displaying subtitle information associated with the first media content in a preset area in the media content stream playing interface, the method further comprises:
displaying a preset function control in response to a selecting operation for a target text in the subtitle information associated with the first media content, wherein the preset function control is configured for triggering a preset function acting on the target text.

15. The method according to Claim 1, wherein, after the displaying subtitle information associated with the first media content in a preset area in the media content stream playing interface, the method further comprises:
switching to play a second media content in the media content stream playing interface in response to a media content switching operation, and displaying subtitle information associated with the second media content in the preset area.

16. The method according to any one of Claims 1 to 15, wherein the subtitle information associated with the first media content is determined according to text information generated by recognizing the speech information in the first media content, and/or the subtitle information associated with the first media content is determined by an editing operation of the user who posts the first media content.

17. The method according to any one of Claims 1 to 15, wherein the subtitle information associated with the first media content comprises at least one link added by the user who posts the first media content, and the link is configured for triggering a jump to an associated interface of the first media content.

18. An information display apparatus, comprising:
a first control display module for displaying, during playing a first media content in a media content stream playing interface, a preset character control in a playing image of the first media content; and
a subtitle display module for displaying subtitle information associated with the first media content in a preset area in the media content stream playing interface in response to a trigger operation for the preset character control, wherein the subtitle information associated with the first media content is determined based on speech information in the first media content.

19. The apparatus according to Claim 18, further comprising: a module for performing the method according to any one of Claims 2 to 17.

20. An electronic device comprising:
one or more processors;
a storage means for storing one or more programs,
wherein the one or more programs, when executed by the one or more processors, cause the one or more processors to implement the information display method according to any one of Claims 1 to 17.

21. A storage medium containing computer-executable instructions, wherein the computer-executable instructions, when executed by a computer processor, are used to perform the information display method according to any one of Claims 1 to 17.
